# EUROPEAN PATENT APPLICATION

(11) **EP 1 109 136 A2**
(43) Date of publication of application: **20.06.2001**
(21) Application number: 00200036.2
(22) Date of filing: 10.01.2000
(51) Int. Cl.: G07B 15/02, G07F 7/00

(54) **Device for the payment of services and goods**

(30) Priority: 16.12.1999 IL 13355399
(71) Applicant: Baran Advanced Technologies (86) Ltd., Omer 84965 (IL)
(72) Inventor: Kaner, Avigdor, 85358 Lehavim (IL); Rosenberg, Armand David, 76468 Rehovot (IL); Katz, Itamar, 46705 Hertzelia (IL)
(74) Representative: Pezzoli, Ennio

(57) **Abstract**

Device for obtaining services and/or goods from a network having a central computer, and paying for the same. The device comprises a CPU; at least one non-volatile memory; at least one buffer memory; modem means, adapted for radio frequency transmission and/or reception to and from a network central computer or computers; at least one A/D and one D/A converter; power sources or means for connecting to power sources; at least one display, and at least one input device. The input device may comprise activating and disactivating means, a keyboard, or means for issuing voice commands.

## Description

### Field of the Invention

This invention relates primarily to a parking device, programmed for obtaining parking rights in parking spaces, such as in parking lots or along streets. This invention further relates to a device for purchasing services other than parking rights, including services connected or not connected with the use of vehicles, and for purchasing goods of any kind.

### Background of the Invention

The problem of obtaining permission to park in parking lots or elsewhere, and of paying the fees connected with the parking, and fines, if any violation of parking regulations should occur, has received wide attention in the art and a great number of patents have been obtained for various ways in which to regulate parking. Thus, e.g., USP 4,310,890 discloses a parking system which includes a special sign that displays information about a particular parking space, a parking meter into which the displayed information is entered that accumulates parking information in accordance with the interdisplayed information, and a terminal that receives and processes the parking information accumulated by the parking meter.

PCT Application WO 93/20539 discloses a vehicle parking system in which each parking place incorporated in the system is assigned a unique digital and/or alphabetical code which is unique to that particular parking space. characterized in that the vehicle is assigned a unique digital and/or alphabetical code; and in that when the vehicle is parked in one such parking space and when parking of the vehicle is terminated, the parking space code and the vehicle code, together with a unique code assigned to a vehicle driver are sent to a database for registration of the parking space, the vehicle concerned and the parking period, and for determining the parking fee and the address to which the parking fee shall be debited, on the basis of the data received.

PCT Application WO 97/13222 of Avigdor Kaner and Armand Rosenberg, discloses a vehicle parking network, which comprises a transmitter/responder device for each subscriber and a complementary box, which can be coupled to the transmitter/responder device and only to it and permits it to communicate with a central computer. The complementary box is provided with identification marks that can be scanned from the outside and that includes a microcontroller, memory means and timing means.

USP 5,940,481 discloses a method for parking reporting, comprising providing a plurality of parking spaces at a multiplicity of dispersed parking facilities; parking a vehicle in a parking space chosen from one of said parking spaces; and reporting to a central control unit via a personal non-dedicated mobile communication device, an indication that said parking space is currently occupied.

The present invention is an improvement over the systems and methods of the foregoing patents. It is also an improvement over devices and methods disclosed the aforesaid PCT application WO 97/1322, the disclosure of which is incorporated herein by reference. The present invention provides a single device that can be attached to a vehicle, that is so structured and programmed that, once it has been actuated, it can carry out all the operations required for receiving parking authorization and paying parking fees and, if needed, fines, and permit easy and efficient control on the part of the parking controllers and an exchange of information between said controller and the parking device.

It is therefore a purpose of this invention to provide such a device and the programs required to operate it satisfactorily.

It is a further purpose of this invention to provide such a device that can be used to purchase other services, whether connected with a vehicle, such as the admission to toll roads and the payment of tolls, or not connected with it.

It is a further purpose of this invention to provide such a device that can be used to acquire goods and pay for them.

It is a still further purpose of the invention to provide such a device which includes a record of all the activities carried out by means of it, for the purpose of paying sums due, verifying the accuracy of parallel registrations, and so forth.

Other purposes and advantages of the invention will appear as the description proceeds.

### Summary of the Invention

The device according to the invention will be called hereinafter "parking device", or, briefly, "PD", but this denomination is used only for convenience and does not involve a limitation and does not exclude that the device, if desired, may be used for purposes other than parking or for additional purposes as well as for parking.

The parking device includes:
1 - a CPU or Central Programming Processor,
2 - at least one a permanent or semi-permanent memory (hereinafter "non-volatile memory"), e.g. a flash memory,
3 - at least one buffer or volatile memory (RAM), for storing information that is only temporarily required,
4 - modem means, adapted for radio frequency transmission and/or reception to and from the network central computer or computers, and optionally, for any other desired transmission and/or reception,
5 - at least one A/D and one D/A converter,
6 - power sources, or means for connecting to power sources,
7 - at least one display and preferably at least two displays, one for the car driver (the "inner display") and the other (the "outer display") for other persons, generally for parking supervisors or control stations, and
8- at least one input device, typically a keyboard, optionally complemented by means for issuing voice commands, for activating and disactivating the PD and, optionally, for inputting other commands or data into the PD.

The parking device will have registered in its non-volatile memory all the parameters necessary for carrying out the parking or means for acquiring such parameters. Said parameters include the definition of the parking spaces or lots in which the vehicle is allowed to park, the duration of the permitted parkings, the fees applicable to each parking space and at each time, the codes required for communicating with the central computer of each parking network, fines due for violations, codes for communicating with the parking controllers, codes for communicating with devices or terminals of the sales network (if any), and the like. The non-volatile memory may also include data or programs for effecting the payment of sums due. These parameters are essentially permanent. They may not be changed by the parking device owner, but may be changed from time to time by the central computer, at its initiative or at the PD owner's request, as established by the membership agreement of the network.

When a parking is carried out, the driver will activate the device by any activating means, e.g. by depressing a key or keys, or by giving a voice command, or by activating a radiation emitter. He may have to input certain parking parameters, if they are not already registered in the PD or available to it. The PD is programmed to effect a parking countdown and to signal an illegal parking if the allowed time is exceeded. The parking fees due can be calculated by the PD, or the data for calculating them may be transmitted to the central computer, which will carry out the calculation, or both calculations may be carried out. Additionally, the controller device with which the parking supervisors are provided may carry out the same calculation. The transmission to the central computer of data for said calculation, or of the results thereof, may be effected automatically at the end of each parking by the PD when it receives a deactivation command, and/or may be carried out when downloading the parking device into a central computer terminal, and/or may be effected by the parking supervisors or attendants.

Once the device begins the countdown, it activates the display or displays. The outer display will indicate that the vehicle is legally parked, until the parking time is exceeded. When the parking ends, the driver will deactivate the parking device and a signal to that effect, together with any information that is to be associated with it, will be automatically transmitted to the central computer. If the driver does not deactivate the PD, an illegal parking signal will be automatically transmitted to the central computer as soon as the permitted parking time is exceeded and a warning signal may be concurrently generated by the PD or transmitted from the central computer to the PD.

The parking supervisor or attendant, if he feels that the vehicle is legally parked, may take no action or, preferably, may request from the PD the data of the vehicle and the time data, which will be registered in the supervisor's device or parking controller and transmitted to the central computer when the parking controller is downloaded into it. The supervisor will send messages to the PD, preferably by infrared radiation, which, being directional, will be received only by the vehicle for which it is intended. The PD will send messages to the parking controller preferably by short distance radio microchip transmitters, generally called "Bluetooth" technology (said technology, created by telecommunication industries, is an open standard for wireless communication of data and voice). If the supervisor finds a violation, he will cause it to be registered in the PD's non-volatile memory, and these registrations will be such that only the central computer can cancel them when the PD is connected to it, generally through a terminal.

The PD need communicate to the central computer only the fact that the parking has begun or has ended. In some cases, it may be necessary, additionally to communicate the parameters of the parking or a code from which the computer can identify said parameters. For this purpose, the PD, once actuated by the driver, will attempt to communicate with the central computer, and if a communication band is not available, will automatically repeat this attempt at predetermined intervals of time. The same thing will occur for any connection that the PD may wish to establish with the central computer. This will render communications cheaper. If the PD has not been actuated, the outer display will remain inactive and the parking supervisor will find that the parking is illegal. Preferably, the PD will always be able to register messages from the parking controller even if it has not been actuated by the driver. Alternatively, the parking supervisor may communicate the fact of the illegal parking of a given vehicle to the central computer.

Communications from the parking device to the parking controller will preferably be carried out by radio emission based on wavelength that is common to all the parking controllers. If the range of the parkings is so broad that it is impossible to use the same wavelength for all parking controllers, each such controller will transmit a code that will cause the PD to emit radiation with the wavelength of the controller.

The parking fees may be prepaid, and in this case a card registering the prepaid sum will be inserted into the parking device and the fees due will be gradually detracted from it, in a way which is known in the art; and when the registered sum becomes zero, the driver will be so advised by the inner display, and the outer display will signal illegal parking.

Alternatively, no parking time will be previously purchased the PD may have to be downloaded into a terminal connected with the central computer, when the due fees reach a certain value or after a certain time has elapsed from the previous downloading. Failure to download the device as required will be registered by the central computer and a fine will be imposed on the PD owner. The fees and/or fines due will be paid to the competent PA, or other sales network owner, from a bank account of the PD owner, which will have been authorized to do so by said owner when he becomes a member of the parking circuit, or in any other way. Failure to pay will cause cancellation of the membership and other penalties that will be specified in the membership agreement.

If the parking device is used to pay for services other than parking or goods, this will entail acquiring membership in other networks. A use of the PD, that will generally be required besides parking, is the payment of tolls for traveling on certain roads or entering certain spaces. Other uses that may be desired by the PD owner, and may be called "optional uses", are the purchase of goods or other services not related to the parking or driving of a car, including car maintenance and repair services. Each type of service or goods will be carried out by a dedicated network. The PD owner will become a member of each network, as he desires, and in so becoming, will arrange with the network the ways of acquiring the goods or services and of paying for them. For example, the goods may be the acquisition of items from vending machines of a given company. Such machines will be equipped with means for receiving from the parking device a request for a certain type and amount of goods and calculating the sum due. The PD will communicate agreement to the required price and ask for the delivery of the goods. The vending machine will respond by delivering the goods, and will effect and/or register the payment in the ways that have been agreed. For registration purposes, the data entered in the vending machine will also be registered in the parking device. Preferably, the communication between the vending machine and the PD will be by way of infrared and/or radio waves, as in the case of communications with a parking controller. If the services or goods acquired by means of the PD are not publicly available through a vending machine, suitable ways of carrying out the transaction will be established.

In a form of the invention, the parking device is combined with a vehicle location unit (VLU). PD and VLU may be combined only functionally, or they may be structurally integrated in a single unit. The VLU will generally be continuously active, but, anyway, when it is active, the coordinates of the vehicle location are calculated by a vehicle location computer. Said coordinated may be communicated at fixed time intervals to the central computer of the parking system, and therefore the parking location of the vehicle, and the corresponding parking parameters, will always be known. Alternatively, and preferably, the coordinated will be transmitted by the vehicle location computer to the VLU and by this latter to the parking unit. The PD will transmit them to the central computer of the parking system. In any case, if the PD is not activate or is deactivated, and yet the vehicle enters into or remains in a parking space, said central computer will be aware of it and will register an illegal parking, and further, may inform the competent parking controller, who will act accordingly.

The components of the parking device hereinbefore listed will be suitably programmed to operate as described hereinafter. The programs, insofar as they actuate the parking device, are an aspect of the invention. The parking method by which the PD operates is also an aspect of the invention.

### Brief Description of the Drawings

In the drawings:
- Fig. 1 is block diagram of a parking device according to an embodiment of the invention;
- Fig. 2 is a flow diagram illustrating the operation of the said device, and therefore the software by which it is controlled.

### Detailed Description of Preferred Embodiments

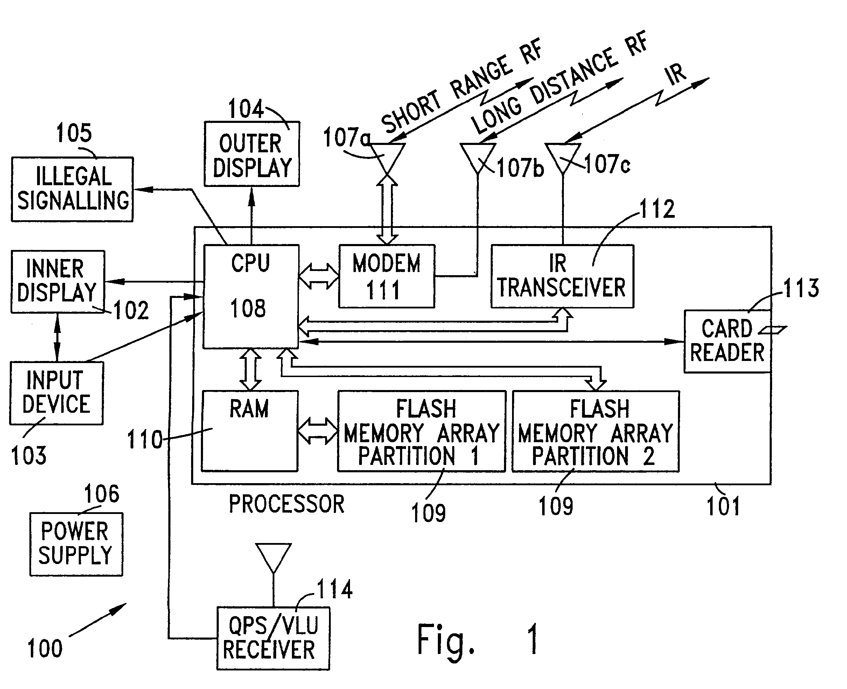

A preferred embodiment of a device according to the invention will now be described with reference to Fig. 1. In the description that follows, the device will be designated as the "parking device", or briefly, "PD". It should be noted that this designation is only used for convenience and is in no way intended to limit the application of the inventive device to parking transactions or to limit the function or structure of the device.

Fig. 1 is a block diagram of a parking device - which is particularly intended for use in parking vehicles, in which case it is strictly speaking a PD, but can be used with obvious adaptations for the payment of other services and of goods - according to a preferred embodiment of the invention. The device 100 comprises a processor 101 for controlling its operation and the received/transmitted data, an inner display 102, coupled to the processor 101, for displaying data related to the transactions made by the user and/or the current status and availability of the services/goods that may be provided, an input device 103, coupled to the controller 101 and optionally to the inner display 102, for allowing the user to interact with the device 100, an outer display 104, coupled to the processor 101, for displaying data related to the transactions made by the user and/or the current status and availability of the services/goods which may be provided, a signaling device 105, for providing indications related to the status of services/goods prior to, or during a transaction, to the user, a supply unit 106 for supplying electrical energy to the device 100, and an array of antennas and/or sensors, 107a to 107c for communicating with transceivers located inside vending machines and/or connected to a computerized center of service providers. It will be understood that when the PD is used for parking vehicles, it will be installed in the vehicle, the inner display will show information primarily intended for the driver and the outer display will show information primarily intended for the parking supervisor. When the PD is used for other purposes, it may be detached from the vehicle.

According to a preferred embodiment of the invention, the processor 101 comprises a Central Processing Unit (CPU) 108, which is used to process incoming and outgoing data flows, and to control the operation of the device 100. The CPU 108 operates according to a set of software commands (the "operating software") which are downloaded into a non-volatile memory 109, such as a flash memory, and stored therein. The CPU 108 is connected to the flash memory 109 via a data link. The flash memory 109 may comprise a hardware or software write-protected area (partition 2) containing the operating software. The operating software may be updated only by the service provider - for software relating to parking, by the central computer of the parking network. The flash memory 109 may also comprise an unprotected area (partition 1) containing the database which comprises the details of a specific user and other details related to all the transactions that are associated with said specific user.

A volatile memory 110, such as a Random-Access-Memory (RAM), is connected to the CPU 108 and to the flash memory 109. The operating software stored in partition 2 of the flash memory 109 is loaded into the RAM 110 whenever the device is activated by the user. This enables the CPU 108 to access the software related data in higher rate and also to temporarily store ("write" operation) data required for its processing operations. A modem 111, containing at least one but preferably two, and, if required, even more than two, Radio-Frequency (RF) transceivers, and which is linked to the CPU 108, is used to modulate an RF signal to carry the outgoing (transmitted) data. The data carrying RF signal is then transmitted by a first short-range RF transmitter (such as a "Blue-Tooth" transmitter) via a short-range RF antenna 107a. The range of the transmitted data is selected to be sufficient to reach receivers located in close proximity to the service area, or control stations, or vending machines. Whenever desired, the contents of the database is read from partition 1 in the flash memory 109 and another (second) RF signal is modulated according to these data. The data carried by the second RF signal are then transmitted by the second long distance transceiver, and via a long distance RF antenna 107b, to a central computer which stores the received data and updates the previously stored data associated with the specific user. Incoming data, in the form of a modulated data-carrying RF signal may be received and demodulated by the modem 111, and the relevant data are then extracted and delivered to the flash memory, and/or, if needed, to the volatile memory 110, under the control of the CPU 108. Such communication channel can be used, for example to download updated version of the operating software into partition 2 of the flash memory 109.

The processor 101 also comprises an Infra-Red (IR) transceiver 112 which is used to receive data transmitted to the device 100 from devices located in its close vicinity, such as a transmitter located in a device carried by a parking supervisor, or in a control station, or in automatic vending machines, or from data transmitters located at the facility of a service provider. The transmitted data are carried by a modulated IR signal which is received via the IR sensor 107c and demodulated in the IR transceiver 112.

According to a preferred embodiment of the invention, the device 100 may comprise a card reader 113, which is used to download crediting data from a card that is inserted into a suitable slot in the reader. The downloaded crediting data are stored in the database (partition 1) and used by the operating software for billing and for conditioned selling of services or goods.

The device 100 may also be linked to a locating device 114, which provides data related to the location of the device 100. Such locating device may be, for example, a Vehicle Locating Unit (VLU) attached to a car (for anti-theft purposes) or a Global Positioning System (GPS) receiver used for navigation.

The services and/or goods acquired by the owner of the parking device according to a preferred embodiment of the invention are provided by vendors operating networks that distribute the goods and/or services. The owner of the PD will become a member of those networks that are of interest to him. For acquiring parking services, the parking device owner may require membership in a single network or in a plurality of networks, each of the networks belonging to a parking authority, hereinafter "PA".

For purchasing goods or services other than parking services, the PD owner will acquire membership in sales networks that provide the desired goods or services, e.g., a network of automatic vending machines. To become a member of a network, the PD owner will enter into an agreement with the network under which the goods and/or services are acquired and paid for. Each network will have its own control system which will hereinafter be designated the "central computer". It is noted that this designation is provided merely for convenience, and is in no way intended to be interpreted as a limitation on the function or structure of the control system.

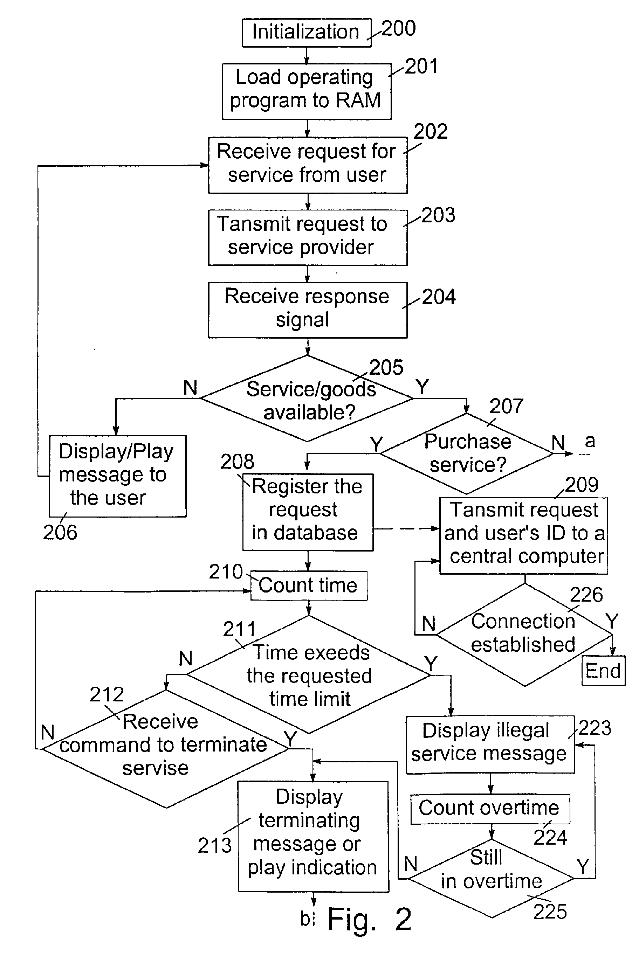

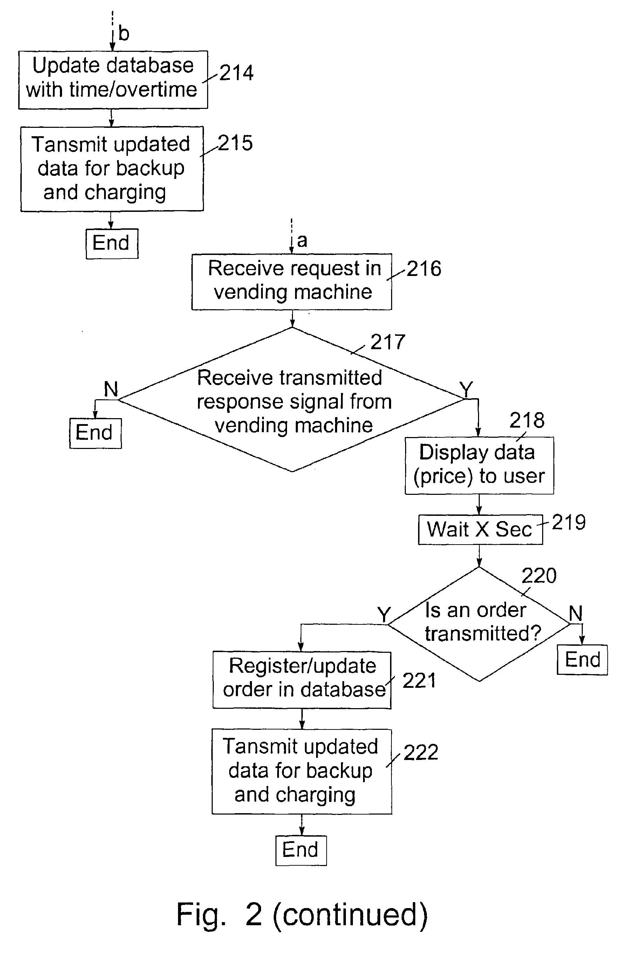

Fig. 2 is a flow sheet illustrating the operation of the device such as device 100 of Fig. 1. The number in parenthesis indicate the various stages of said operation.

Once the device is initialized (200), usually by activating the power supply to the device so that all of its components are ready for operation, the operating program stored in the non-volatile memory 109 is loaded into the volatile memory or RAM 110 (201). The user inputs, through device 103, a request for a service (202). The request is transmitted by the appropriate RF to the service provider (203). A response signal is received by device 100 (204) from the vending machine or from the service provider, this step being optional. In view of this response the CPU of device 100 checks whether the service is available (205). If it is not, a corresponding message is displayed to the user (206) and the user will renew the request for service or make another, alternative request (202).

If the service is available, device 100 further checks whether a request or purchase of the service has been issued (207). If it has been issued, it is registered in the database (208). The user's identification data (ID in the drawing) of the user and the details of the request are transmitted to a central computer (209). The device 100 attempts to carry out this transmission and verifies (226) whether communication with the central computer has been established. If it has not been established, it is attempted repeatedly at predetermined short intervals, until it is established.

The preceding steps are essentially common, with obvious adaptations, to all uses of device 100. The following steps apply specifically to vehicle parking. Device 100 begins to downcount the time (210), while the outer display shows a legal parking. If the time parked exceeds the requested time limit (211). If the time parked has not exceeded the requested time, the CPU checks whether a command to terminate the service has been received (212). If it has not been received, the counting of time continues (210). If it has been received, a corresponding message is displayed on one or both displays (213); the database is updated with time or overtime (214) and the final updated data are transmitted to the central computer for back-up and charging (215). If the command to terminate the service has not been given, device 100, besides continuing the counting of time (210), signals in the outer display, and preferably in the inner display as well, that the parking is still in overtime (223), and counts the overtime (224). The overtime check is repeated periodically, until it is terminated and the end of the parking is displayed, as at step 213.

What follows refers to the purchase of goods, e.g. from vending machines. Once the decision to purchase goods or services (207) has been taken, this request is received in the vending machine (216). The machine sends a response signal to device 100. If no response is given, this means that the goods are not available or the machine is inactive, and the process ends. If a response is given, it contains price data and other information, and these are displayed to the user (218). The device remains in a waiting condition for a predetermined number of seconds (219) and then checks whether a purchase order has been transmitted (220). If it has not been transmitted, the process ends. If it has been transmitted, the purchase order is registered and the database is updated accordingly (221). The updated data are transmitted for back-up and charging to the appropriate central computer (222).

The operation of the device 100 further illustrated by the following examples.

### Example 1: Vehicle Parking

In this example, the device 100 is attached to a car and is used to charge the driver for parking services whenever he enters a parking zone selected from a predetermined group of parking zones which are associated with the service. It is therefore strictly speaking a parking device. The driver may enter into a space located in a public parking zone, such as along a painted curb stone or in a closed parking area. Whenever the driver approaches the close vicinity of the entrance of a closed parking zone that is full, a corresponding warning IR signal is transmitted from a transmitter located in the closed parking zone to the device 100, and is received in the IR transceiver 112 via the IR sensor 112. The received warning signal is converted into corresponding data, which are processed by the CPU 108 and converted to a message that is displayed to the driver on the inner display 102, indicating that there is no parking space available in that specific closed parking zone. Alternatively, the CPU 108 may convert the processed data into a corresponding signaling operation, which may be presented to the driver. Such signaling may comprise a visible light signal or an audio signal that is played using the loudspeakers of the built-in audio system. In this case, the driver can move to another parking zone.

When the driver enters an available parking spot, he activates the parking device 100 by providing the input device 103 with a command indicating the required parking time. The input device 103 may be a keyboard or a set of buttons which are depressed by the driver according to a predetermined order. Alternatively, inputs from the driver can be received by the PD through a microphone and a speech recognition system, which converts the driver's utterance into a corresponding activation signal that is received by the CPU 108. Other input means can be adopted by the user. The CPU 108 processes the command received, according to instructions provided by the operating software, and in response, the CPU 108 displays an "authorized parking" message on the outer display 104 (which can be seen by any parking supervisor) and concurrently starts to count the actual parking time. The CPU 108 also updates the database with data related to the accumulated parking time periodically. When the required parking time lapses, the CPU 108 changes the message displayed on the outer display 104 to "illegal parking" and continues to count the parking "overtime", unless the driver extends the required parking time by a following additional input to the input device. The illegal "overtime" is stored in the database and is then used to fine the driver or to charge him for overtime. Alternatively, or additionally, a supervisor having a suitable transceiver linked to a data registration device can transmit an IR (or an RF) request signal whenever the outer display 104 indicates that the parking is illegal. The request signal is processed and the operation software drives the CPU 108 to retrieve the data related to that and/or previous illegal parking and to transmit it to the registration device via the short-range RF receiver residing in modem 111.

The driver may extend the legal parking time by inserting a card containing data which represent a limited legal parking time. For example, the driver can select a parking card from a plurality of cards with different parking periods, offered at a selling point. Alternatively or additionally, the driver can extend the legal parking time by providing a corresponding input using the input device 103. If the driver wishes to terminate the legal parking before requested parking time lapses, he disactivates the parking utility of the device 100 by a corresponding input through the input device 103 when he returns to his car. If the vehicle remains in the parking spot after a predetermined time (specified in the software instructions that are stored in partition 2 of the flash memory) after the driver has disactivated the parking utility, the CPU 108 displays an "illegal parking" message on the outer display 104 and the device 100 starts to count and store the illegal "overtime". According to a preferred embodiment of the invention, if the device 100 comprises a Vehicle Locating Unit (VLU) 114, the CPU 108 compares the current location of the device 100 to the location of the parking zone (which is predetermined and stored in the database or periodically transmitted to the device 100 from a transmitter located at the parking zone) and whenever the car exceeds a predetermined distance from the parking zone (i.e., the current car actually leaves the parking spot), the counting of the parking time (or of the illegal "overtime") is stopped. The data related to the accumulated legal and/or illegal parking time periods is stored in the database. A backup record to the contents of the database is transmitted through the modem 111 to a central computer (for cases when there is disagreement with respect to charges for legal/illegal parking or when the device 100 is damaged).

### Example 2: Purchase from a Vending Machine

According to a preferred embodiment of the invention, the device 100 can be also used to purchase goods from automatic vending machines. While it is not necessary, for such a purchase, that the device 100 be attached to a car, it will be assumed that it is so attached. The driver therefore enters a space designated for purchases from a specific vending machine and parks temporarily in said space.

Then, the driver activates the device 100 by providing the input device 103, in the ways set forth in Example 1, with a command indicating the required type and amount of goods. The CPU 108 processes the command received, according to instructions provided by the operating software, and causes a request to be sent through modem 111 and the first short-range RF transmitter (such as a "Blue-Tooth" transmitter) via short-range RF antenna 107a, to the vending machine. This latter sends back, either by short-range RF or by infrared radiation, the information that the requested goods are available (if they are not, the device will operate as hereinbefore described with reference to an attempt to park in an area in which no parking space is available) and their price and any other necessary information. The CPU will process the received information, will compare it with acceptance conditions registered in the non-volatile and/or volatile memory, and, if those conditions are met, will cause a confirmation to be sent to the vending machine. This latter will debit the user with the corresponding sum and will communicate this to the PD, which will register the debt in the volatile memory. The physical ways in which the goods are made available is outside the scope of the invention, The ways in which the debt is paid will be those that have been established in the agreement by which the user has become a member of the relevant vending network.

### Example 3: Use of a toll road

The conditions for allowing a vehicle to pass through a toll road will depend on the particular toll road system. It will be assumed herein, for purposes of exemplification, that the system comprise an entrance station, before the entrance into the toll road, an exit station after the exit from the toll road, and, possibly, control stations along the toll roads. The vehicle, and specifically the PD, must be able to communicate with those stations. For this purpose, the driver may have to stop the vehicle in front of one or more stations or to slow it down to permit communication. Further, communication will generally be by way of radio, though it may be possible in some cases to use infrared radiation; and the driver will be informed, in any suitable way, of the radio frequency on which he must syntonize the PD emitter, whether it is a short range or a long range one.

Based on the above assumptions, when the driver wishes to be allowed to travel along a toll road, he will input into device 100 a corresponding request. This can be done when approaching the toll road entrance or when standing in front of an entrance station. The request, processed by the CPU, will be transmitted to the entrance station through antenna 107a or 107b. The entrance station will reply with a request of information and payment, which will be received by the device 100 and displayed on the inner display. The driver will transmit to the entrance station the appropriate reply, including an obligation to pay the toll. The driver may have an agreement with the toll road system specifying the ways in which the payment is to be made, particularly if he drives habitually over a certain road or over the roads of a certain system. Alternately, appropriate ways may have been established for undertaking an obligation to pay: for instance, transmitting the data of a credit card. Finally, the driver may have a prepaid card, that is read by card reader 113, and from which the toll is deducted and credited to the toll road system. Then, the entrance station will transmit a permit to enter, which may, in some cases, be accompanied by the removal or lifting of a physical obstacle. The permit will be displayed on the outer display of the device 100.

The vehicle will then travel along the road and pass in front of control stations, if such exist. Such stations may be particularly required if it is physically possible to enter the toll road without a permit. The fact that the permit is displayed on the outer display may be sufficient, if the control stations are manned by supervisors and the vehicle is required to slow down sufficiently for the supervisors to check the outer display. Otherwise, the device 100 will be so programmed that, once the permit has been received and whether it is displayed on the outer display or not, a signal will be broadcast to the control stations, generally through the long range antenna 107b, communicating the existence of the permit. Each toll road will have established means for stopping a vehicle which travels over it without permit, or, more typically, for registering the car registration number, possibly by photographing the car plates, and the driver may be pursued as a traffic law violator. When the car, that has received the permit, exits the toll road, the device 100 will communicate with the exit station in the same way that it has communicated with the entrance station and the whole transaction will be registered in the memory of device 100, as well as in the memory of the toll road central computer.

The above examples and description have been provided only for the purpose of illustration, and are not intended to limit the invention in any way. As will be appreciated by the skilled person, the invention can be carried out in a great variety of ways, employing more than one technique from those described above, all without exceeding the scope of the claims.

## Claims

1. Device for obtaining services and/or goods from a network having a central computer, and paying for the same, which comprises:
A - a CPU,
B - at least one non-volatile memory,
C - at least one buffer memory,
D - modem means, adapted for radio frequency transmission and/or reception to and from a network central computer or computers,
E - at least one A/D and one D/A converter,
F - power sources or means for connecting to power sources,
G - at least one display, and
H - at least one input device.

2. Device according to claim 1, wherein the non-volatile memory is a flash memory.

3. Device according to claim 1, wherein the input device comprises activating and disactivating means.

4. Device according to claim 1, wherein the input device comprises a keyboard.

5. Device according to claim 1, wherein the input device comprises means for issuing voice commands.

6. Device according to claim 1, wherein the modem means further comprises means for further transmission and/or reception.

7. Device according to claim 1, which comprises and inner and an outer display.

8. Device according to claim 1, wherein the non-volatile memory stores data that may not be changed by the device owner, but may be changed by the central computer of the network.

9. Device according to claim 1, which is a parking device, which parking device comprises means for effecting a parking countdown and signaling an illegal parking if the allowed time is exceeded.

10. Device according to claim 9, which comprises means for calculating the parking fees due.

11. Device according to claim 9, which comprises means for receiving infrared signals.

12. Device according to claim 9, which comprises means for emitting various short range radio signals.

13. Device according to claim 9, which comprises means for the insertion of a card registering a prepaid sum for paying parking fees and for gradually detracted from said sum the parking fees due.

14. Device according to claim 1, for obtaining permission to travel on certain roads or entering certain spaces and for paying the corresponding tolls.

15. Device according to claim 1, for purchasing goods from vending machines.

16. Device according to claim 9, functionally combined with a VLU.

17. Device according to claim 9, structurally integrated with a VLU in a single unit.

18. Device according to claim 16 or 17, comprising means for periodically transmitting to the central computer of the parking system the location of the vehicle

19. Use of a device according to claim 1, for parking vehicles.

20. Use of a device according to claim 1, for traveling over toll roads.

21. Use of a device according to claim 1, for purchasing goods from vending machines.

22. Method of parking a vehicle in a parking space that is part of a parking network controlled by a central computer, which comprises:
I - providing a parking device, which comprises a CPU, at least one non-volatile memory, at least one buffer memory, modem means, at least one A/D and one D/A converter, at least one input device, at least one display, and a power source;
III - providing an operating program and storing it in said non-volatile memory;
IV - determining other parking parameters and storing them in said non-volatile memory;
when it is desired to use a parking space,
V - activating said parking device;
VI - entering a parking request through said input device;
VII- checking whether the desired parking space is available;
VIII - if it is available: a) starting to downcount the parking time, b) displaying a legal parking time, and c) transmitting the parking request to the network central computer;
IX - when it is desired to terminate the parking, communicating the termination to the network central computer and displaying a termination sign at least on said outer display.

23. Method according to claim 19, wherein, if communication with the network central computer is not established in carrying out step VIII or IX, attempts to establish said communication are automatically renewed a predetermined intervals, until communication is established.

24. Method according to claim 19, wherein the parking request is limited to a specified maximum time, and, if the parking time exceed said maximum time, and an extension thereof has not been requested, the overtime is counted and an illegal parking sign is displayed at least in said outer display.

25. Software for causing a parking device, which comprises a CPU, at least one non-volatile memory, at least one buffer memory, modem means, at least one A/D and one D/A converter, at least one input device, at least one display, and a power source, to carry out the operations set forth in claim 22.

26. Device for obtaining services and/or goods from a network having a central computer, and paying for the same, substantially as described and illustrated.

27. Method of parking a vehicle in a parking space that is part of a parking network controlled by a central computer, substantially as described and illustrated.

28. Software for controlling the operation of a device for obtaining services and/or goods from a network having a central computer, and paying for the same, substantially as described and illustrated.
